# EUROPEAN PATENT SPECIFICATION

(11) **EP 4 293 162 B1**
(45) Date of publication and mention of the grant of the patent: **12.02.2025**
(21) Application number: 21773642.0
(22) Date of filing: 05.08.2021
(51) Int. Cl.: E02F 9/26, E02F 9/28

(54) **WEAR ASSEMBLY FOR AN EARTH-MOVING MACHINE AND CORRESPONDING MACHINE**
SCHUTZKAPSELN FÜR ERDBEWEGUNGSMASCHINEN MIT EINER SCHLITZANTENNE
CAPSULES DE PROTECTION POUR ENGINS DE CHANTIER AVEC UNE ANTENNE À FENTE

(30) Priority: 12.02.2021 EP 21382114; 25.02.2021 EP 21382164
(43) Date of publication of application: 20.12.2023
(73) Proprietor: Metalogenia Research & Technologies S.L., 08005 Barcelona (ES)
(72) Inventor: VALLVÉ BERTRAN, Nil, 08349 Cabrera de Mar (ES); FERRÁNDIZ BORRAS, Vicent, 08174 Sant Cugat del Vallès (ES)
(74) Representative: Curell Suñol S.L.P.
(86) International application number: PCT/ES2021/070594
(87) International publication number: WO 2022/171910

(56) References cited:
- EP-A1- 3 715 537
- WO-A1-2020/243598
- US-A1- 2015 322 634

## Description

### Field of the Invention

The invention is comprised in the field of earth-moving machines, particularly for excavators, loaders, dredging machines, or the like.

More specifically, the invention relates to a wear assembly of an earth-moving machine comprising a wear element and a support. Said wear element is configured for being coupled to said support such that an interface is defined between said support and said wear element, with a first interface surface and a second interface surface, opposite one another, generally running parallel to one another.

The invention also relates to an earth-moving machine incorporating said wear assembly.

### State of the Art

Wear elements and their supports are parts usually manufactured from strong materials, usually cast material, given that they are exposed to working conditions that normally involve high pressures and extreme temperatures. A standard example of a wear element is an excavator tooth, with the support thereof being commonly known as a tooth adapter; however, there are numerous types of earth-moving machines, such as loaders, excavators, dredging machines, bulldozers, etc. Likewise, there are different wear elements and supports, such as teeth, intermediate adaptors, front guards, side guards, among others.

It is desirable to control the presence of the wear element on the support during earth-moving operations, given that if the wear element were to come loose, it could be lost among the extraction material, which involves deterioration of the support and a loss of efficiency in earth-moving tasks. Furthermore, it can be particularly problematic in cases in which said material passes through a grinder, given that the presence of a wear element could cause damage or interrupt the operation of said grinder.

For this reason, different solutions aimed at determining the presence or absence of the wear element have been developed. However, many of these solutions require complex systems, with electronic components that may be rather unsuitable for the working conditions, which require the solution to be physically very robust.

Some of the solutions proposed in other fields of the art involve the use of magnetic elements, such as magnets or electromagnets, which generate a magnetic field, and magnetic sensors which detect the presence or absence of said magnetic field. The magnet is thereby placed in one part and the detector in another; if the detector detects the presence of the magnetic field, it is assumed that the parts are together; if a magnetic field is not detected or the detection is below a threshold, it is deduced that the part where the magnet or electromagnet is located has been moved away.

It is apparent that a magnet and a detector placed directly on the interface between the wear element and the support cannot be used; otherwise, these components which may be delicate, would be destroyed by the high pressure and extreme temperature working conditions. Furthermore, during earth-moving operations, material in the form of small particles is introduced in the area of the interface, causing pressures within the interface to increase and also causing any element located at said interface or on the surfaces demarcating the interface to deteriorate due to the friction between the contact surfaces between the wear element and the support. It is thus based on the idea of a magnetic generator and a detector, each inserted in one of the parts of the machine, wear element, or support, such that the part itself serves as protection. Given that the parts are usually made of cast material, it is necessary to provide respective openings, both in the case of the field generator and in the case of the detector. In particular, it is necessary for the magnetic field lines to be arranged such that they pass through the detector. In other sectors of the art, the magnet is simply arranged with one pole directed to the detector. However, in the case of earth-moving machines, this arrangement is not apparent given the magnetic permeability characteristics of the wear element and the support. Following experimental efforts and simulations, it was concluded that with the elements arranged inside the respective parts, it was necessary to arrange the generator such that the poles are parallel to the attachment interface between parts. The field lines thereby go through the aperture in which the detector is arranged in a manner that is also parallel to said interface, and perpendicular to the walls of said aperture. This facilitates the placement of the detector inside the aperture, situating it such that its maximum detection direction is in the direction followed by the magnetic field. This option is particularly appropriate given that detectors generally have an elongated shape, with connecting pins whereby the detection information is extracted. The detector is thereby protected, and the presence of the magnetic field can be detected.

However, this first alternative discovered by the applicant has the problem that, after a period of exposure to the magnetic field, the parts become magnetized, and said magnetization lasts some time even though the parts are separated from one another, which results in a delay in detection, since the detector is not capable of distinguishing whether the magnetic field comes from the magnet or from the part itself which has been magnetized.

It is therefore necessary to provide a solution for the detection of the presence of the wear element which can be detected rapidly and, at the same time, can be used in the working conditions of an earth-moving machine.

WO 2020/243598 A1 discloses a monitoring device and system located in a hole in a base of a ground engaging product for monitoring a characteristic of the ground engaging product. The characteristic can pertain to presence, part ID, condition, usage and/or performance of ground-engaging product secured to the earth working equipment. The monitoring system may detect the presence and/or absence of one or more of the components of the ground engaging product.

EP 3715537 A1 discloses a capsule for protecting an electronic device inside a wear element of an earth moving machine, corresponding wear element and machine. The capsule has a central axis defining an axial direction, a front end, and a rear end. The capsule comprises a container, extending in the axial direction from said front end, provided with an inner chamber for housing said electronic device, and has a front part provided with a flange, and a rear part. The capsule also comprises a cover that can be removably coupled to said container and configured for covering said rear part of said container.

### Description of the Invention

The purpose of the invention is to provide a wear assembly of the type indicated above, which allows the problems proposed above to be solved.

This purpose is achieved by means of a wear assembly of the type indicated above, characterized in that it comprises:
- a magnetic portion configured to generate a magnetic field, said magnetic portion being provided at one of said wear element and said support, such that one of the magnetic poles of said magnetic field is perpendicular to said second interface surface, preferably also to said first interface surface; and
- a magnetic detector, provided at the other one of said wear element and said support, such that it has a maximum of detection in a direction perpendicular to said second interface surface;

wherein said second interface surface has:
   - a channel extending from said second interface surface to a first depth inside the corresponding wear element or support; and
   - a step-shaped recess adjoining said channel and extending from said second interface surface to a second depth, with said second depth being less than said first depth;
said magnetic detector being provided in said step-shaped recess.

In the context of this document, first interface surface is used to refer to the interface surface corresponding to the magnetic portion and the component in which said magnetic portion is provided, i.e., the wear element or the support. Likewise, the second interface surface is the one corresponding to the magnetic detector and the component in which said magnetic detector is provided, i.e., the support or the wear element. The interface between the wear element and the support is defined between both surfaces. The channel extends to a first depth, preferably to the depth where a circuit configured to receive measurements from the magnetic detector is located, such that the connection between the magnetic detector and said circuit can be arranged inside said channel. The recess is not as deep as the channel, and thus, a step is formed.

The magnetic field generated by the magnetic portion thereby impinges the second interface surface in a substantially perpendicular manner, given that the wear element and the support are manufactured from casting metal. The base of the step-shaped recess is preferably parallel to the surface, so that the magnetic field also tends to impinge said step in a perpendicular manner. It is therefore possible to arrange the sensor in said step, protected from the exterior, but oriented with the maximum of detection directed in perpendicular. Said orientation minimizes the detection of residual magnetic fields that are due to the magnetization of the surrounding metal. A skilled person will understand that the depth of the recess cannot be too high, as that would alter the angle of incidence of the magnetic field in that area. However, after having explained the above elements and technical considerations, and with the help of his/her general knowledge in the art, said skilled person would not have any problems selecting the suitable depth of the step-shaped recess to maintain a suitable level of protection for the magnetic detector, but at which, over time, the magnetic field continues to have a perpendicular component that is sufficiently significant for the detector to be able to detect said magnetic field.

Additionally, in the event of a residual magnetic field being created due to magnetization of the metal, the presence of the channel facilitates the arrangement of said field with the field lines in a position perpendicular to the walls of the channel, i.e., parallel to the second interface surface. Therefore, even when said residual magnetic field appears, it is not readily detectable by the magnetic detector, given that said detector is oriented with the maximum of detection in a direction perpendicular to the dominant direction of said residual magnetic field.

These two technical effects have a synergistic association which allows, for the described wear assembly, the magnetic detector to be able to detect the presence of the magnetic portion, but minimizes the adverse effects produced by the magnetization of the surrounding metal, which could involve a false detection even without the presence of the magnetic portion.

Based on the invention defined in the main claim, preferred embodiments the features of which are described in the dependent claims have been provided.

Preferably, said magnetic portion is provided in said wear element and said magnetic detector is provided in said support, which facilitates the power supply of the assembly, particularly in the case in which said magnetic portion basically comprises passive components such as a magnet. The magnetic detector is usually connected to some active element, for example, a circuit receiving measurements from the detector. By placing the magnetic detector in the support, it is possible to even power the active portions by means of electrical wiring if needed. Nevertheless, depending on the type of wear element and support, and particularly on parameters such as shape and dimensions, resistance, etc., the inverse placement, with the magnetic portion in the support and the magnetic detector in the wear element, may also be envisaged.

Preferably, said channel has a tubular shape in which one of the ends opens into said interface, which allows the detecting portion of the magnetic detector to be arranged close to the end opening into the interface, allowing at the same time the connection terminals of the magnetic detector to pass through said channel into the respective support or wear element.

Preferably, said channel has a trench shape opening into said interface at an elongated opening, which favours the possible residual magnetic field lines to appear in the direction between the two closest walls of said trench, therefore being parallel to said second interface surface and thereby minimizing the above-mentioned residual detection effect.

Preferably, said magnetic detector comprises a Hall effect sensor, with advantageous features for the invention, particularly, the direction of the maximum of detection. Likewise, the connection with the terminals, or the terminals themselves, can be arranged inside said channel, with the head of the sensor arranged in said step-shaped recess, horizontal and oriented with the maximum in perpendicular with respect to the second interface surface. Given the usual shape of sensors of this type, it will often be necessary to bend the terminals 90° with respect to the head of the sensor to introduce them into the channel.

Preferably, said second interface surface, said channel, and said step are formed in the corresponding support or wear element. The casting metal of the corresponding support or wear element is thereby the surrounding metal providing the above-mentioned technical effects, providing protection to the elements, and favouring the suitable orientation of the magnetic field.

Preferably, said magnetic detector is encapsulated in a non-ferromagnetic material, preferably an epoxy resin, such that said material protects the detector inside the wear assembly, without the encapsulation material interfering with the magnetic fields.

Preferably, said magnetic detector is provided inside a protective capsule, such that said second interface surface, said channel, and said step-shaped recess are formed in said capsule. This type of encapsulation allows greater accuracy in manufacturing the elements, particularly for the channel and the step, which could be difficult to achieve if they had to be formed in the corresponding support or wear element. Furthermore, it facilitates the accurate positioning of the magnetic detector relative to the magnetic portion, since the inner geometry of the two surfaces forming the interface is sometimes limited or geometrically complicated for placing a detector and a magnetic element, which can hinder the relative positioning between both components.

Preferably, said wear assembly further comprises a protective plate manufactured from a non-ferromagnetic material and arranged between said interface and said magnetic detector, providing further protection for the magnetic detector.

Preferably, said magnetic portion comprises a magnet, and thus, a power supply is not necessary in the magnetic portion. Said magnet is preferably a neodymium magnet, given that these magnets are strong and resistant to demagnetization.

Preferably, said magnet is inserted in a recess in the corresponding wear element or support and, preferably, encapsulated in a non-ferromagnetic material, more preferably an epoxy resin, such that it is protected by the same element in which it is inserted, either the wear element or the support. Moreover, the use of such encapsulation materials has no effect on the magnetic field generated by the magnet, and the latter can additionally be fixed to the corresponding wear element or support simply by the magnetic field generated by said magnet.

In an alternative embodiment, said magnet is provided in a magnet holder comprising a casing housing said magnet, said casing being configured to be inserted in a housing in the corresponding support or wear element. This option is particularly advantageous for manufacture, given that casings with exact dimensions for each magnet can be manufactured and be reused for different wear elements or supports. Furthermore, the manufacture and independent transport of each element, which can be assembled at the time of being mounted on the earth-moving machine, is possible. It should be pointed out that, as would be apparent for a skilled person, the magnet holders herein described can be used in any wear assembly which requires a magnet portion and are not limited to only those cases in which the detector is arranged inside a step-shaped recess, given that the concept of the magnet holder and the different embodiments thereof meet a technical objective other than that raised at the beginning of the document.

In a preferred embodiment, said wear element and said support each have pin openings, such that when said wear element is coupled to said support, said pin openings create a pin hole configured to receive a pin to fix said wear element to said support; wherein said magnet holder wear assembly further comprises a U-shaped fixing bracket to fix said pin in said wear assembly, with an arc-shaped end and two separate arms extending in a central segment and ending at an open end; said casing being configured to be secured to said bracket in said arc-shaped end, and said open end being configured to be coupled with retaining means provided in the corresponding wear element or support; wherein said housing and said retaining means are located on opposite sides of one of said pin openings. This embodiment is particularly advantageous for the cases in which the wear element is fixed to the support by means of a pin which is secured with a bracket acting as a retainer of the pin inside the wear assembly. The hole and the actual pin system are thereby utilized to fix the magnet holder in the corresponding element, either the support or the wear element. The bracket is arranged such that its arms are located around the pin when the assembly is mounted. The arc-shaped end of the bracket and the casing are secured to one another, and the other end of the bracket is secured to the actual wear element or support, such that the entire assembly is firmly secured to the corresponding wear element or support.

Preferably, the distance between said arms in said central segment of said bracket is less than the diameter of said pin hole, so that, upon introducing the pin, said pin deforms the arms of the bracket, and said deformation provides an additional securing for the magnet holder with respect to the pin. Preferably, the corresponding wear element or support is provided with stop guides around said pin opening, configured to receive the arms of said bracket once said arms are deformed by the pin and limiting the deformation they may sustain, so that said arms are fitted between said stop guides and said pin, thereby improving the securing.

In a preferred embodiment, said casing extends in a first direction between a first end and a second end and has a fixing step at said first end which is configured to receive said arc-shaped end of said bracket, such that when said casing is secured to said bracket, said second end is located closer to said open end than said first end, and said fixing step prevents the movement of said arc-shaped end of said bracket towards said interface. The arc-shaped end of the bracket is thereby secured by the casing which is, in turn, secured to the corresponding wear element or support. The fixing step is located on the inner face, i.e., the face opposing the face opposite the interface, which favours securing, preventing the end of the bracket from moving towards the interface. At the same time, the mounting of the wear assembly is also simplified.

In an alternative embodiment, said casing extends in a first direction between a first end and a second end and has snap-fitting means at said first end which are configured to secure said arc-shaped end of said bracket by snap-fitting, such that when said casing is secured to said bracket, said second end is located closer to said open end than said first end; said snap-fitting means preferably being in the form of a flange. This embodiment is another alternative to the previous embodiment, by changing the way of securing the arc-shaped end of the bracket by snap-fitting, instead of being retained by the fixing step.

Preferably, said casing has a front face which is arranged opposite said interface when said magnet holder is inserted in the corresponding wear element or support, a rear face, opposite said front face, and side faces extending between said first end, said second end, said front face, and said rear face; wherein said casing has depressions in the front portion of said side faces, said magnet holder being configured such that, when said bracket is secured to said casing, segments of said arms of said bracket are arranged in contact with said side faces of said casing and behind said depressions, thereby forming side seats; and wherein said housing comprises retaining protrusions complementary to said side seats, such that, when said magnet holder is inserted in said housing, said side seats and said retaining protrusions cooperate to prevent said magnet holder from being moved towards the front. The assembly formed by the casing and the bracket thereby forms seats having a shape complementary to the shape of the retaining protrusions provided in the corresponding wear element or support, which favours the fixing of the magnet holder inside the support assembly utilizing the pin system.

Preferably, said casing has side protrusions, arranged at said second end, said magnet holder being configured such that, when said bracket is secured to said casing, segments of said arms of said bracket are arranged in front of said side protrusions, i.e., between the casing and the interface. Said side protrusions contribute to the general securing of the magnet holder with the corresponding wear element or support, preventing rotational movements of the bracket due to the working stresses and providing an area in which the arms of the bracket bending, adapting to the inner housing in which the magnet holder must be placed, is favoured.

Preferably, said casing is manufactured from a heat-resistant plastic, which is advantageous for manufacture, and at the same time, it provides the casing with mechanical and physical properties which favour protection of the magnet.

Preferably, said casing is manufactured from metal, and preferably has a strip of elastic material, preferably polyurethane, at said first end. A very physically strong casing is thereby provided. The optional strip of elastic material provides an additional degree of elasticity which favours protection of the magnet and assembly tasks, particularly the snap-fitting of the bracket.

The invention also relates to an earth-moving machine comprising at least one wear assembly such as the one described above.

The invention also covers other detail features illustrated in the detailed description of an embodiment of the invention and in the attached figures.

### Brief Description of the Drawings

The advantages and features of the invention will become apparent from the following description in which preferred embodiments of the invention are described in a non-limiting manner with respect to the main claim in reference to the attached figures.
Figure 1 is a schematic depiction of a magnet with a magnetic sensor located inside a metal structure, corresponding with a situation in which the sensor is protected but affected by the magnetization of the surrounding material.
Figure 2 is a schematic depiction of the main components of the invention, with the sensor placed in a step-shaped recess, said sensor and the magnet being suitably oriented to allow detection, avoiding the effects of residual magnetization.
Figure 3A is a detailed perspective view of a protective capsule for the magnetic detector, having a step-shaped recess in which there is provided the magnetic detector and a tubular-shaped channel running between the interface surface and the inside of a capsule.
Figure 3B is a detailed perspective view of another embodiment of a protective capsule for the magnetic detector, having an elongated trench-shaped channel on the interface surface. The discontinuous line indicates the section used in Figure 4.
Figure 4 is a section view of the capsule of Figure 3B. The section corresponds to the discontinuous line of said figure.
Figure 5 is an exploded perspective view of a wear assembly formed by an excavator tooth and tooth adapter which are fixed by means of a pin secured by means of a bracket.
Figure 6 is a perspective view of the inner portion of a wear element with a housing for a magnet holder.
Figure 7 is an enlarged detail of Figure 6.
Figure 8 is a perspective view of a magnet holder according to an embodiment of the invention comprising a casing for a magnet.
Figure 9 is a perspective view of the magnet holder of Figure 8 assembled with a pin fixing bracket.
Figure 10 is a perspective view of the magnet holder of Figure 9 once it has been inserted in the corresponding housing inside the wear element.
Figure 11 is a perspective view of another embodiment of the magnet holder according to the invention, which shows the casing separated from the bracket.
Figure 12 is a perspective view of the magnet holder of Figure 11 once the casing has been assembled with the bracket.
Figure 13 and Figure 14 are perspective views of two insertion steps for inserting the magnet holder of Figure 12 assembled with the bracket inside its housing in the wear element.
Figure 15 is a simplified section view of the wear assembly once assembled.
Figure 16 is a detailed section view of the wear assembly once assembled.

### Detailed Description of Embodiments of the Invention

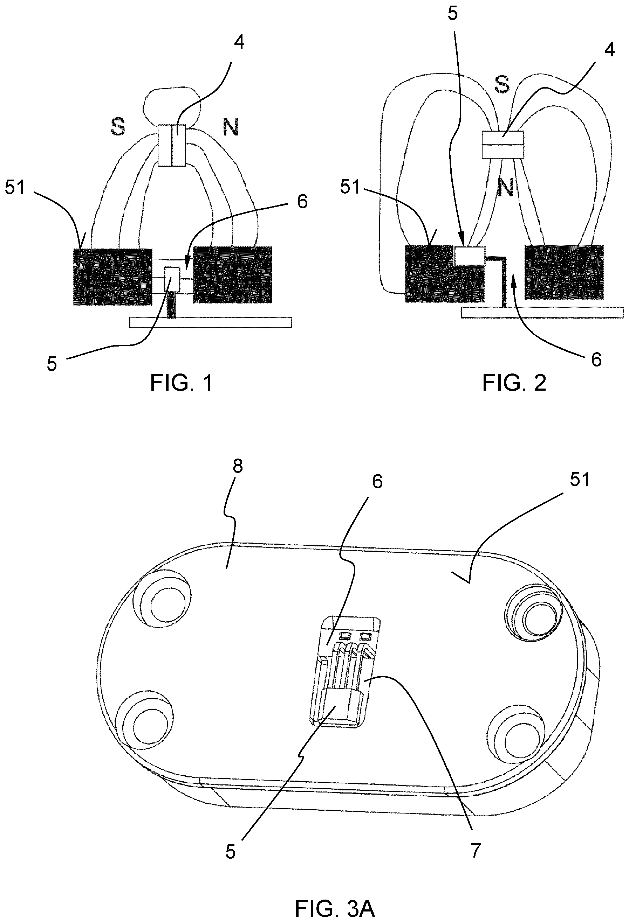

Figure 1 shows a simplified diagram of a magnet 4 opposite a magnetic detector 5 which is located in a channel 6 inside metal walls, approximately drawing the magnetic field lines. The letters S and N indicate the south and north poles of the magnet, respectively. The surface of the metal walls would correspond to the second interface surface 51. Given the orientation of the field inside the channel 6, it would be necessary to place the magnetic detector 5 oriented as shown, with the maximum of detection in the same direction as the depicted field lines. However, this option is affected by the residual magnetization of the surrounding metal material, given that part of the magnetic field from inside the channel 6 is maintained when the magnet 4 is removed.

Figure 2 shows the relative orientation of the components of the invention, with the sensor placed in a step-shaped recess, oriented with the maximum of detection in a direction perpendicular to the second interface surface 51.

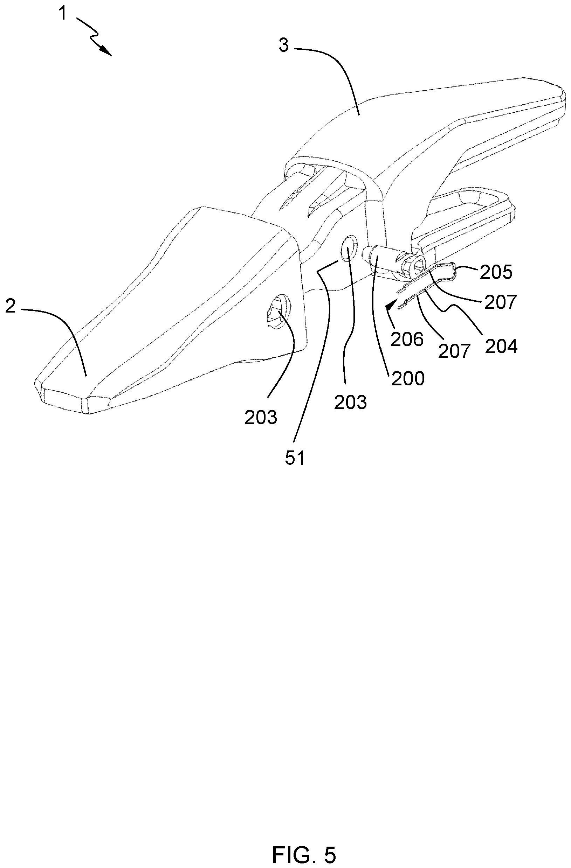

Figure 5 shows a general view of a first embodiment of a wear assembly 1 of an earth-moving machine according to the invention. The assembly 1 comprises a wear element 2 and a support 3, with the wear element 2 configured to be coupled to the support 3. In the case of this first embodiment, the earth-moving machine is an excavator, the wear element 2 is an excavator tooth, and the support 3 is a tooth adapter. The example is purely illustrative and non-limiting, and other types of earth-moving machines, wear elements 2, and supports 3 may be envisaged, as discussed above. When the wear element 2 and the support 3 are coupled together, an interface is defined between both with a first interface surface 41 and a second interface surface 51, opposite one another.

As shown in Figure 5, the wear element 2 and the support 3 each have pin openings 203, such that when said wear element 2 is coupled to said support 3, said pin openings 203 create a pin hole configured to receive a pin 200 for fixing said wear element 2 to said support 3. The wear assembly 1 further comprises a fixing bracket 204 for fixing the pin 200 in the wear assembly 1. This bracket is U-shaped, with an arc-shaped end 205 and two separate arms 207 extending in a central segment and ending at an open end 206.

The wear assembly 1 also has a detection system to detect the falling of the wear element 2 to detect when said wear element 2 moves away from the support 3. The detection system comprises the basic elements shown in Figure 2, particularly a magnetic portion 4 which generates a magnetic field and a magnetic detector 5 which detects magnetic fields. The magnetic portion 4 is a neodymium magnet provided in the wear element 2, whereas the magnetic detector 5 is a Hall effect sensor provided in the support 3. The use of elements of another type for generating and detecting the magnetic field, and the inverse positioning, i.e., with the magnetic detector 5 provided in the wear element 2 and the magnetic portion 4 provided in the support 3, may also be envisaged. The arrangement and orientation of the elements is such that one of the magnetic poles of the magnet 4 is perpendicular to the second interface surface 51, which is the one relative to where the magnetic detector 5 is located. Likewise, the Hall sensor 5 has a maximum of detection in a direction perpendicular to the second interface surface 51.

As shown in Figure 3A, the magnetic detector 5 is provided inside a protective capsule 8, having a channel 6 extending from said second interface surface 51 to a first depth, reaching a control circuit arranged inside said capsule 8 which is in charge of reading the measurements from the magnetic detector 5. The channel has a tubular shape with an end opening into said interface, and a step-shaped recess 7 adjoining said channel 6 and extending from said second interface surface 51 to a second depth, with said second depth being less than said first depth. The second interface surface 51 around the Hall sensor 5, the channel 6, and the step-shaped recess 7 are thereby formed in said capsule 8. As seen in Figure 3A, the magnetic detector 5 is provided in said step-shaped recess 7, with the terminals being introduced in the channel 6 to reach the inside of the capsule 8 containing the different electronic devices configured to read the measurements from the Hall sensor 5 and determining if the excavator tooth has fallen out. The magnetic detector 5 is protected by an epoxy resin filling the step-shaped recess 7 and at least the portion of the channel 6 containing the terminals.

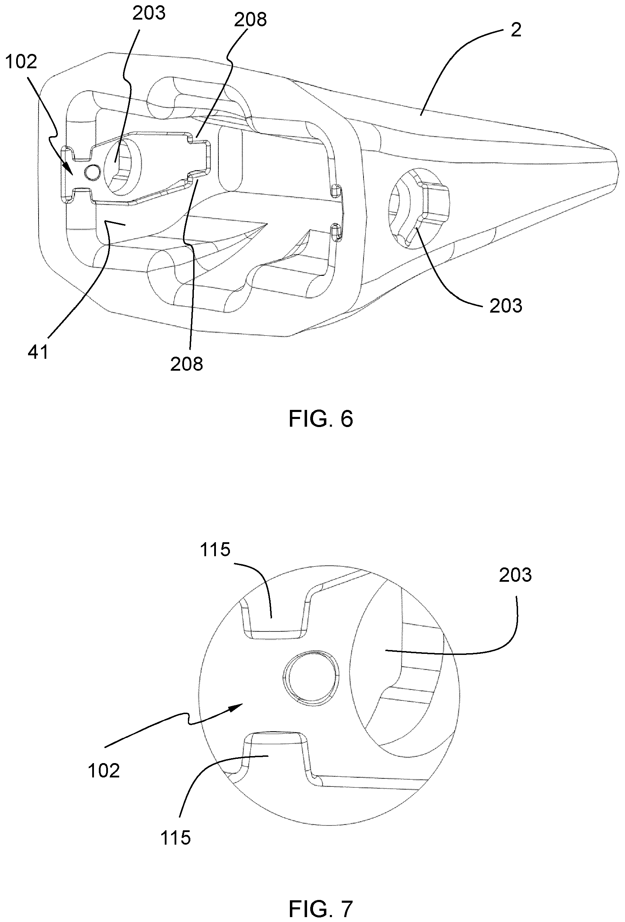

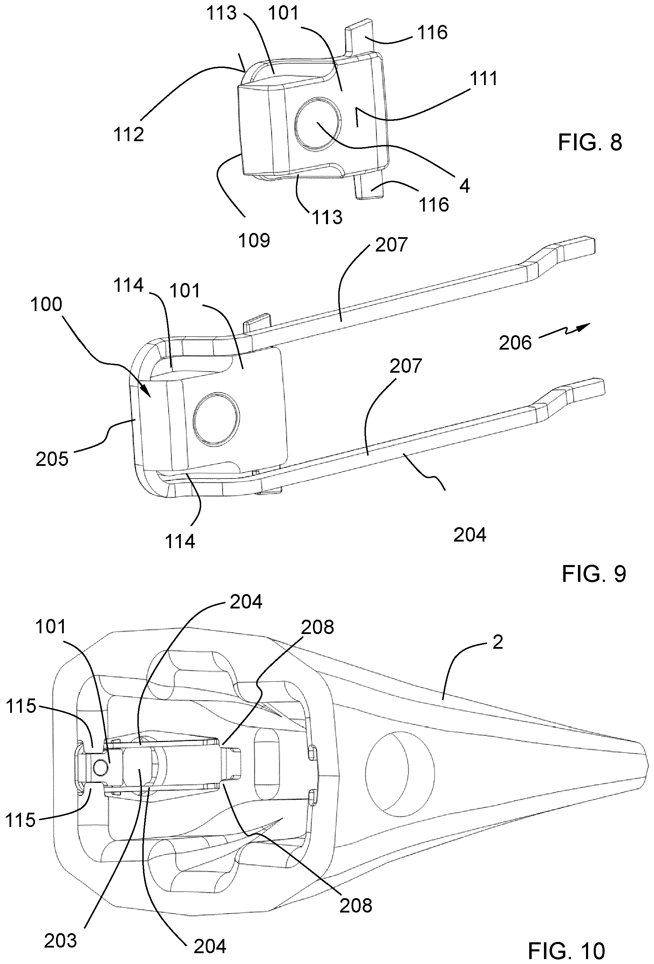

It is shown in Figure 8 that the magnet 4 is provided in a magnet holder 100 comprising a casing 101 housing said magnet 4. The casing 101 is manufactured from a heat-resistant plastic and is configured to be inserted in a housing 102 in the wear element 2. The shape of the housing 102 is shown in Figure 6 and in the detail in Figure 7. As depicted in Figure 9, the casing 101 is configured to secure the fixing bracket 204 by its arc-shaped end 205. Likewise, the open end 206 of the bracket is configured to be coupled with retaining means 208 provided in the wear element 2, which in the case of the embodiment comprises wings formed in the tooth 2 and creating cavities in which each end of the arms 207 of the bracket 204 can be housed. The housing 102 and the retaining means 208 are located on opposite sides of one of the pin openings 203, such that the central segment of the bracket 204 crosses said pin opening 203. The casing 101 extends in a first direction between a first end and a second end and has a fixing step 109 at said first end which is configured to receive the arc-shaped end 205 of the bracket 204, such that when said casing 101 is attached to said bracket 204, as shown in Figure 9, the second end is located closer to said open end 206 than said first end, and said fixing step 109 prevents the movement of said arc-shaped end 205 of said bracket 204 towards said interface.

Figure 8 shows how the casing 101 has a front face 111 which is arranged opposite said interface when said magnet holder 100 is inserted in the wear element 2, a rear face 112, opposite said front face 111, and side faces extending between said first end, said second end, said front face 111, and said rear face 112. The casing 101 furthermore has depressions 113 in the front portion of the side faces, such that when the bracket 204 is attached to said casing 101, like in Figure 9, segments of the arms 207 of said bracket 204 are arranged in contact with the side faces of said casing 101 and behind said depressions 113, thereby forming side seats 114. The housing 102 in the tooth 2 comprises retaining protrusions 115 shown in detail in Figure 7, which are complementary to said side seats 114. Therefore, when the magnet holder 100 is inserted into the housing 102, as shown in Figure 10, the side seats 114 and the retaining protrusions 115 cooperate to prevent the magnet holder 100 from being moved towards the front. The casing 101 furthermore has side protrusions 116, arranged at its second end, such that, when the bracket 204 is attached to said casing 101, segments of the arms 207 of the bracket 204 are arranged in front of said side protrusions 116, as shown in Figure 9, preventing the bracket from rotating towards the wear element.

Other embodiments of the wear assembly according to the invention which share many of the features described in the above paragraphs are shown below. Accordingly, only the different elements will be described hereinafter, whereas for the common elements reference shall be made to the description of the first embodiment.

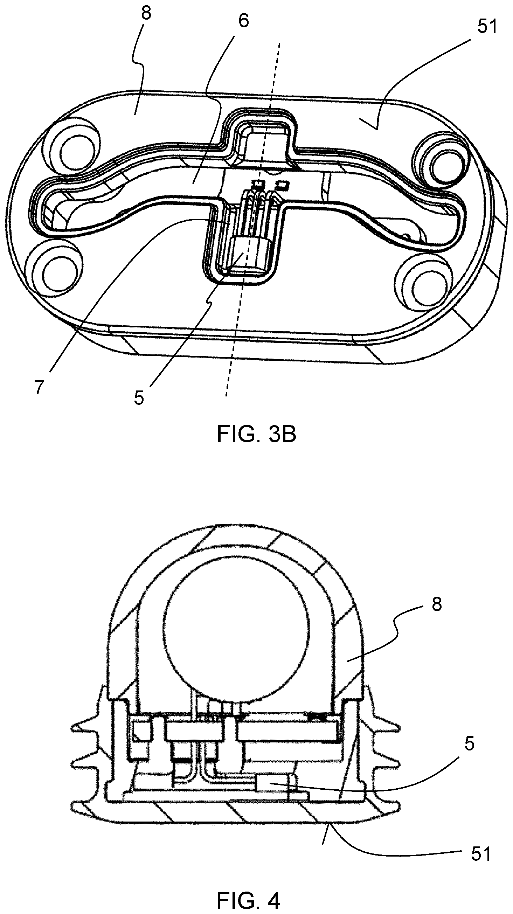

In a second embodiment shown in Figure 3B and Figure 4, the magnetic detector 5 is provided inside a protective capsule 8, having a channel 6 having a trench-shaped opening into said interface at an elongated opening.

In a third embodiment not shown in the figures, the second interface surface 51, the channel 6, and the step-shaped recess 7 are formed directly in the corresponding support 3.

In a fourth embodiment, derived from the third embodiment, the magnetic detector 5 is encapsulated in an epoxy resin.

In a fifth embodiment not shown in the figures, the wear assembly 1 further comprises a protective plate manufactured from a non-ferromagnetic material and arranged between the interface and the magnetic detector 5.

In a sixth embodiment not shown in the figures, the magnet is inserted in a recess 7 in the wear element 2 and encapsulated in an epoxy resin.

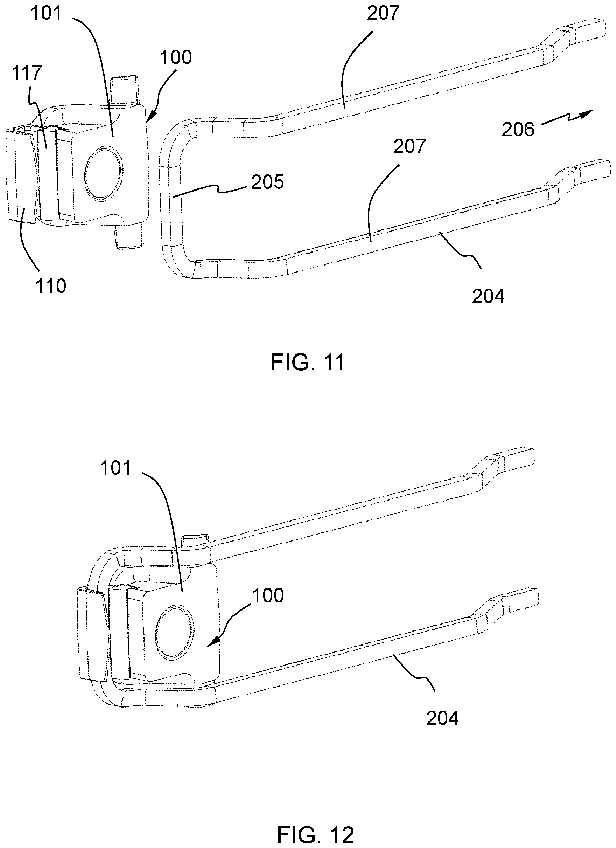

In a seventh embodiment shown in Figures 11 and 12, the casing 101 has snap-fitting means 110 shaped like a flange at its first end which are configured to secure the arc-shaped end 205 of the bracket 204 by snap-fitting, as shown in Figure 12. The casing 101 is manufactured from metal and has a strip of elastic material, particularly polyurethane 117, at its first end.

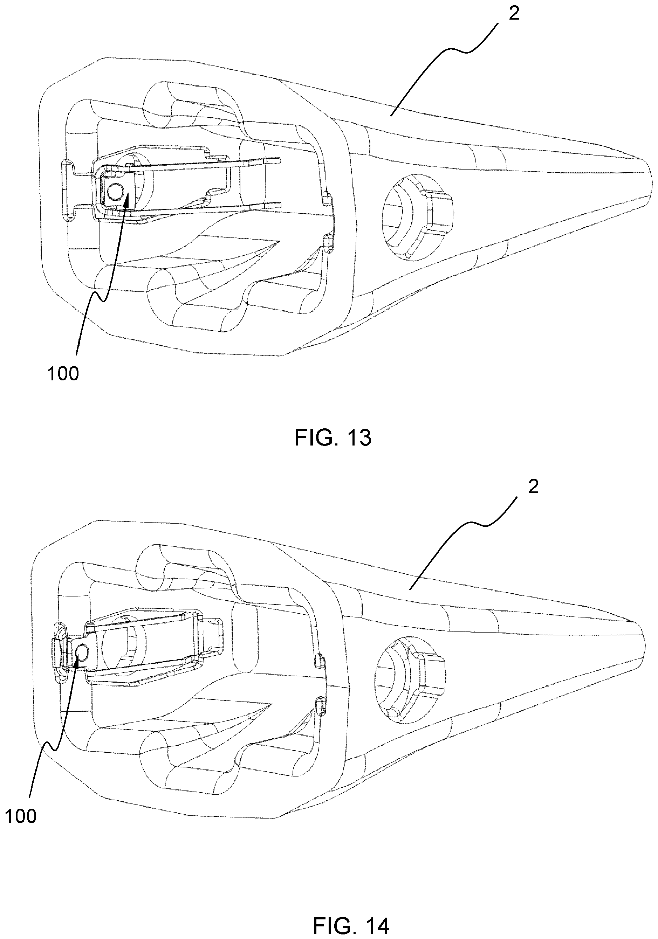

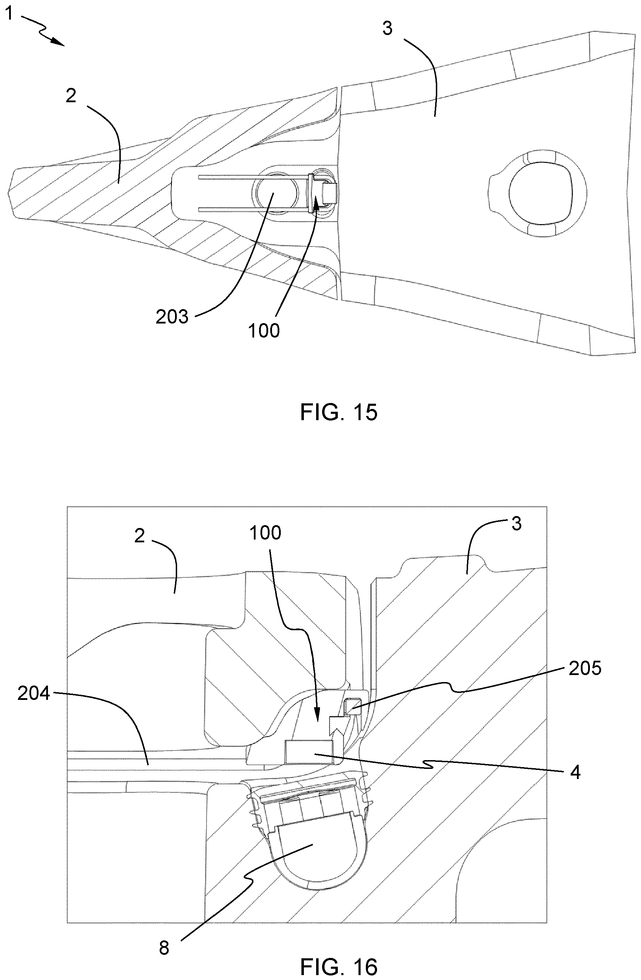

Figures 13 and 14 show the insertion process for inserting the assembly formed by the magnet holder 100 and the bracket 204 inside the tooth 2. It is depicted with the casing 101 of the seventh embodiment, but it would be equivalent in the other described cases. Likewise, Figures 15 and 16 show sections of the wear assembly 1 once mounted, where the orientation and the distance between the magnet 4 and the magnetic detector 5 and how, thanks to the magnet holder 100, the precise placement of said elements is facilitated, can be seen.

## Claims

1. Wear assembly (1) of an earth-moving machine comprising:
- a wear element (2); and
- a support (3);
said wear element (2) configured for being coupled to said support (3) such that an interface is defined between said support (3) and said wear element (2), with a first interface surface (41) and a second interface surface (51), opposite one another;
**characterized in that** it further comprises:
- a magnetic portion (4) configured to generate a magnetic field, said magnetic portion (4) being provided at one of said wear element (2) and said support (3), such that one of the magnetic poles of said magnetic field is perpendicular to said second interface surface (51); and
- a magnetic detector (5), provided at the other one of said wear element (2) and said support (3), such that it has a maximum of detection in a direction perpendicular to said second interface surface (51);
wherein said second interface surface (51) has:
- a channel (6) extending from said second interface surface (51) to a first depth inside the corresponding wear element (2) or support (3); and
- a step-shaped recess (7) adjoining said channel (6) and extending from said second interface surface (51) to a second depth, said second depth being less than said first depth;
said magnetic detector (5) being provided in said step-shaped recess (7).

2. Wear assembly according to claim 1, wherein said channel (6) has a trench shape opening into said interface at an elongated opening.

3. Wear assembly according to any one of claims 1 or 2, wherein said second interface surface (51), said channel (6), and said step-shaped recess (7) are formed in the corresponding support (3) or wear element (2), said magnetic detector (5) preferably being encapsulated in a non-ferromagnetic material, more preferably, an epoxy resin.

4. Wear assembly according to any one of claims 1 to 3, wherein said magnetic detector (5) is provided inside a protective capsule (8), such that said second interface surface (51), said channel (6), and said step-shaped recess (7) are formed in said capsule (8).

5. Wear assembly according to any one of claims 1 to 4, wherein said magnetic portion (4) comprises a magnet, preferably a neodymium magnet.

6. Wear assembly according to claim 5, wherein said magnet is inserted in a recess (7) in the corresponding wear element (2) or support (3) and, preferably, encapsulated in a non-ferromagnetic material, more preferably, an epoxy resin.

7. Wear assembly according to claim 5, wherein said magnet is provided in a magnet holder (100) comprising a casing (101) which houses said magnet, said casing (101) being configured to be inserted in a housing (102) in the corresponding support (3) or wear element (2).

8. Wear assembly according to claim 7, wherein
said wear element (2) and said support (3) each have pin openings (203), such that when said wear element (2) is coupled to said support (3), said pin openings (203) create a pin hole configured to receive a pin (200) for fixing said wear element (2) to said support (3);
wherein said wear assembly (1) further comprises a U-shaped fixing bracket (204) for fixing said pin (200) in said wear assembly (1), with an arc-shaped end (205) and two separate arms (207) extending in a central segment and ending at an open end (206);
said casing (101) being configured to secure said bracket (204) in said arc-shaped end (205), and said open end (206) being configured to engage with retaining means (208) provided in the corresponding wear element (2) or support (3);
wherein said housing (102) and said retaining means (208) are located on opposite sides of one of said pin openings (203).

9. Wear assembly according to claim 8, wherein said casing (101) extends in a first direction between a first end and a second end and has a fixing step (109) at said first end which is configured to receive said arc-shaped end (205) of said bracket (204), such that when said casing (101) is attached to said bracket (204), said second end is located closer to said open end (206) than said first end, and said fixing step (109) prevents the movement of said arc-shaped end (205) of said bracket (204) towards said interface.

10. Wear assembly according to any one of claims 8 or 9, wherein said casing (101) extends in a first direction between a first end and a second end and has snap-fitting means (110) at said first end which are configured to secure said arc-shaped end (205) of said bracket (204) by snap-fitting, such that when said casing (101) is attached to said bracket (204), said second end is located closer to said open end (206) than said first end; said snap-fitting means (110) preferably being in the form of a flange.

11. Wear assembly according to any one of claims 9 or 10, wherein said casing (101) has a front face (111) opposite said interface when said magnet holder (100) is inserted in the corresponding wear element (2) or support (3), a rear face (112), opposite said front face (111), and side faces extending between said first end, said second end, said front face (111), and said rear face (112); wherein said casing (101) has depressions (113) in the front portion of said side faces, said magnet holder (100) being configured such that, when said bracket (204) is attached to said casing (101), segments of said arms (207) of said bracket (204) are arranged in contact with said side faces of said casing (101) and behind said depressions (113), thereby forming side seats (114); and wherein said housing (102) comprises retaining protrusions (115) complementary to said side seats (114), such that, when said magnet holder (100) is inserted in said housing (102), said side seats (114) and said retaining protrusions (115) cooperate to prevent said magnet holder (100) from being moved towards the front.

12. Wear assembly according to claim 11, wherein said casing (101) has side protrusions (116), arranged at said second end, said magnet holder (100) being configured such that, when said bracket (204) is attached to said casing (101), segments of said arms (207) of said bracket (204) are arranged in front of said side protrusions (116).

13. Wear assembly according to any one of claims 7 to 12, wherein said casing (101) is manufactured from a heat-resistant plastic.

14. Wear assembly according to any one of claims 7 to 12, wherein said casing (101) is manufactured from metal, and preferably has a strip of elastic material, more preferably polyurethane (117).

15. Earth-moving machine comprising at least one wear assembly according to any one of claims 1 to 14.

## Patentansprüche

1. Verschleißanordnung (1) einer Erdbewegungsmaschine, umfassend:
- ein Verschleißelement (2); und
- einen Träger (3);
wobei das Verschleißelement (2) dazu eingerichtet ist, mit dem Träger (3) gekoppelt zu werden, so dass eine Schnittstelle zwischen dem Träger (3) und dem Verschleißelement (2) mit einer ersten Schnittstellenfläche (41) und einer zweiten Schnittstellenfläche (51), die einander gegenüberliegen, definiert wird;
**gekennzeichnet dadurch, dass** sie ferner umfasst:
- einen magnetischen Abschnitt (4), der dazu eingerichtet ist, ein Magnetfeld zu erzeugen, wobei der magnetische Abschnitt (4) an einem des Verschleißelements (2) und des Trägers (3) vorgesehen ist, so dass einer der Magnetpole des Magnetfeldes senkrecht zur zweiten Schnittstellenfläche (51) ist; und
- einen magnetischen Detektor (5), der an dem anderen des Verschleißelements (2) und des Trägers (3) vorgesehen ist, so dass er ein Maximum an Detektion in einer zur zweiten Schnittstellenfläche (51) senkrechten Richtung aufweist;
wobei die zweite Schnittstellenfläche (51) aufweist:
- einen Kanal (6), der von der zweiten Schnittstellenfläche (51) bis zu einer ersten Tiefe innerhalb des entsprechenden Verschleißelements (2) oder Trägers (3) verläuft; und
- eine stufenförmige Aussparung (7), die an den Kanal (6) angrenzt und von der zweiten Schnittstellenfläche (51) bis zu einer zweiten Tiefe verläuft, wobei die zweite Tiefe kleiner als die erste Tiefe ist;
wobei der magnetische Detektor (5) in der stufenförmigen Aussparung (7) vorgesehen ist.

2. Verschleißanordnung nach Anspruch 1, wobei der Kanal (6) eine Grabenform aufweist, die sich an einer länglichen Öffnung in die Schnittstelle öffnet.

3. Verschleißanordnung nach einem der Ansprüche 1 oder 2, wobei die zweite Schnittstellenfläche (51), der Kanal (6) und die stufenförmige Aussparung (7) in dem entsprechenden Träger (3) oder Verschleißelement (2) ausgebildet sind, wobei der magnetische Detektor (5) vorzugsweise in einem nichtferromagnetischen Material, mehr vorzugsweise einem Epoxidharz, eingekapselt ist.

4. Verschleißanordnung nach einem der Ansprüche 1 bis 3, wobei der magnetische Detektor (5) innerhalb einer Schutzkapsel (8) vorgesehen ist, so dass die zweite Schnittstellenfläche (51), der Kanal (6) und die stufenförmige Ausnehmung (7) in der Kapsel (8) ausgebildet sind.

5. Verschleißanordnung nach einem der Ansprüche 1 bis 4, wobei der magnetische Abschnitt (4) einen Magneten, vorzugsweise einen Neodym-Magneten, umfasst.

6. Verschleißanordnung nach Anspruch 5, wobei der Magnet in eine Aussparung (7) in dem entsprechenden Verschleißelement (2) oder Träger (3) eingesetzt ist und vorzugsweise in einem nicht ferromagnetischen Material, mehr vorzugsweise einem Epoxidharz, eingekapselt ist.

7. Verschleißanordnung nach Anspruch 5, wobei der Magnet in einem Magnethalter (100) vorgesehen ist, der ein Gehäuse (101) umfasst, das den Magneten aufnimmt, wobei das Gehäuse (101) dazu eingerichtet ist, in ein Gehäuse (102) im entsprechenden Träger (3) oder Verschleißelement (2) eingesetzt zu werden.

8. Verschleißanordnung nach Anspruch 7, wobei das Verschleißelement (2) und der Träger (3) jeweils Zapfenöffnungen (203) aufweisen, so dass, wenn das Verschleißelement (2) mit dem Träger (3) gekoppelt ist, die Zapfenöffnungen (203) ein Zapfenloch bilden, das dazu eingerichtet ist, einen Zapfen (200) zur Befestigung des Verschleißelements (2) am Träger (3) aufzunehmen,
wobei die Verschleißanordnung (1) ferner einen U-förmigen Befestigungsbügel (204) zum Befestigen des Zapfens (200) in der Verschleißanordnung (1) mit einem bogenförmigen Ende (205) und zwei getrennten Armen (207), die in einem zentralen Segment verlaufen und an einem offenen Ende (206) enden, umfasst;
wobei das Gehäuse (101) dazu eingerichtet ist, den Bügel (204) im bogenförmigen Ende (205) zu sichern, und das offene Ende (206) dazu eingerichtet ist, mit Rückhaltemitteln (208) in Eingriff zu geraten, die in dem entsprechenden Verschleißelement (2) oder Träger (3) vorgesehen sind;
wobei sich das Gehäuse (102) und die Rückhaltemittel (208) auf gegenüberliegenden Seiten einer der Zapfenöffnungen (203) befinden.

9. Verschleißanordnung nach Anspruch 8, wobei das Gehäuse (101) in einer ersten Richtung zwischen einem ersten Ende und einem zweiten Ende verläuft und eine Befestigungsstufe (109) am ersten Ende aufweist, die dazu eingerichtet ist, das bogenförmige Ende (205) des Bügels (204) aufzunehmen, so dass sich das zweite Ende, wenn das Gehäuse (101) am Bügel (204) angebracht ist, näher am offenen Ende (206) als das erste Ende befindet, und die Befestigungsstufe (109) die Bewegung des bogenförmigen Endes (205) des Bügels (204) zur Schnittstelle hin verhindert.

10. Verschleißanordnung nach einem der Ansprüche 8 oder 9, wobei das Gehäuse (101) in einer ersten Richtung zwischen einem ersten Ende und einem zweiten Ende verläuft und Einrastmittel (110) am ersten Ende aufweist, die dazu eingerichtet sind, das bogenförmige Ende (205) des Bügels (204) durch Einrasten zu sichern, so dass sich das zweite Ende, wenn das Gehäuse (101) am Bügel (204) befestigt ist, näher am offenen Ende (206) als das erste Ende befindet, wobei die Einrastmittel (110) vorzugsweise die Form eines Flansches haben.

11. Verschleißanordnung nach einem der Ansprüche 9 oder 10, wobei das Gehäuse (101) eine vordere Fläche (111), die der Schnittstelle gegenüberliegt, wenn der Magnethalter (100) entsprechend in das Verschleißelement (2) oder den Träger (3) eingesetzt ist, eine hintere Fläche (112), die der vorderen Fläche (111) gegenüberliegt, und Seitenflächen, die zwischen dem ersten Ende, dem zweiten Ende, der vorderen Fläche (111) und der hinteren Fläche (112) verlaufen, aufweist, wobei das Gehäuse (101) Vertiefungen (113) im vorderen Abschnitt der Seitenflächen aufweist, wobei der Magnethalter (100) so eingerichtet ist, dass Segmente der Arme (207) des Bügels (204), wenn der Bügel (204) am Gehäuse (101) angebracht ist, in Kontakt mit den Seitenflächen des Gehäuses (101) und hinter den Vertiefungen (113) angeordnet sind, wodurch Seitensitze (114) gebildet werden, und wobei das Gehäuse (102) Rückhaltevorsprünge (115) umfasst, die zu den Seitensitzen (114) komplementär sind, so dass die Seitensitze (114) und die Rückhaltevorsprünge (115), wenn der Magnethalter (100) in das Gehäuse (102) eingesetzt ist, zusammenwirken, um den Magnethalter (100) daran zu hindern, nach vorne bewegt zu werden.

12. Verschleißanordnung nach Anspruch 11, wobei das Gehäuse (101) seitliche Vorsprünge (116) aufweist, die am zweiten Ende angeordnet sind, wobei der Magnethalter (100) so eingerichtet ist, dass Segmente der Arme (207) des Bügels (204), wenn der Bügel (204) am Gehäuse (101) angebracht ist, vor den seitlichen Vorsprüngen (116) angeordnet sind.

13. Verschleißanordnung nach einem der Ansprüche 7 bis 12, wobei das Gehäuse (101) aus einem wärmebeständigen Kunststoff hergestellt ist.

14. Verschleißanordnung nach einem der Ansprüche 7 bis 12, wobei das Gehäuse (101) aus Metall hergestellt ist und vorzugsweise einen Streifen aus elastischem Material, vorzugsweise Polyurethan (117), aufweist.

15. Erdbewegungsmaschine, umfassend mindestens eine Verschleißanordnung nach einem der Ansprüche 1 bis 14.

## Revendications

1. Ensemble d'usure (1) d'une machine de terrassement, comprenant :
- un élément d'usure (2); et
- un support (3) ;
ledit élément d'usure (2) configuré pour être couplé audit support (3) de sorte qu'une interface est définie entre ledit support (3) et ledit élément d'usure (2), avec une première surface d'interface (41) et une seconde surface d'interface (51), opposées l'une à l'autre ;
**caractérisé en ce qu'**il comprend en outre :
- une partie magnétique (4) configurée pour générer un champ magnétique, ladite partie magnétique (4) étant prévue sur l'un dudit élément d'usure (2) et dudit support (3), de sorte que l'un des pôles magnétiques dudit champ magnétique est perpendiculaire à ladite seconde surface d'interface (51); et
- un détecteur magnétique (5), prévu sur l'autre dudit élément d'usure (2) et dudit support (3), de telle sorte qu'il présente un maximum de détection dans une direction perpendiculaire à ladite seconde surface d'interface (51);
dans lequel ladite seconde surface d'interface (51) présente :
- un canal (6) s'étendant depuis ladite seconde surface d'interface (51) jusqu'à une première profondeur à l'intérieur de l'élément d'usure (2) ou du support (3) correspondant; et
- un évidement en forme de gradin (7) jouxtant ledit canal (6) et s'étendant de ladite seconde surface d'interface (51) à une seconde profondeur, ladite seconde profondeur étant inférieure à ladite première profondeur;
ledit détecteur magnétique (5) étant prévu dans ledit évidement en forme de marche (7).

2. Ensemble d'usure selon la revendication 1, dans lequel ledit canal (6) présente une forme de tranchée s'ouvrant dans ladite interface sur une ouverture allongée.

3. Ensemble d'usure selon l'une quelconque des revendications 1 ou 2, dans lequel ladite seconde surface d'interface (51), ledit canal (6) et ledit évidement en forme de gradin (7) sont formés dans le support (3) ou l'élément d'usure (2) correspondant, ledit détecteur magnétique (5) étant de préférence encapsulé dans un matériau non ferromagnétique, de manière plus préférée, une résine époxy.

4. Ensemble d'usure selon l'une quelconque des revendications 1 à 3, dans lequel ledit détecteur magnétique (5) est prévu à l'intérieur d'une capsule de protection (8), de sorte que ladite seconde surface d'interface (51), ledit canal (6) et ledit évidement en forme de gradin (7) sont formés dans ladite capsule (8).

5. Ensemble d'usure selon l'une quelconque des revendications 1 à 4, dans lequel ladite partie magnétique (4) comprend un aimant, de préférence un aimant en néodyme.

6. Ensemble d'usure selon la revendication 5, dans lequel ledit aimant est inséré dans un évidement (7) dans l'élément d'usure (2) ou le support (3) correspondant et, de préférence, encapsulé dans un matériau non ferromagnétique, de manière plus préférée, une résine époxy.

7. Ensemble d'usure selon la revendication 5, dans lequel ledit aimant est prévu dans un support d'aimant (100) comprenant un boîtier (101) qui loge ledit aimant, ledit boîtier (101) étant configuré pour être inséré dans un logement (102) dans le support (3) ou l'élément d'usure (2) correspondant.

8. Ensemble d'usure selon la revendication 7, dans lequel ledit élément d'usure (2) et ledit support (3) présentent chacun des ouvertures de broche (203), de sorte que lorsque ledit élément d'usure (2) est couplé audit support (3), lesdites ouvertures de broche (203) créent un trou de broche configuré pour recevoir une broche (200) pour fixer ledit élément d'usure (2) audit support (3);
dans lequel ledit ensemble d'usure (1) comprend en outre une attache de fixation (204) en forme de U pour fixer ladite broche (200) dans ledit ensemble d'usure (1), avec une extrémité en forme d'arc (205) et deux bras séparés (207) s'étendant dans un segment central et se terminant à une extrémité ouverte (206);
ledit boîtier (101) étant configuré pour fixer ladite attache (204) dans ladite extrémité en forme d'arc (205), et ladite extrémité ouverte (206) étant configurée pour venir en prise avec des moyens de retenue (208) prévus dans l'élément d'usure (2) ou le support (3) correspondant ;
dans lequel ledit logement (102) et lesdits moyens de retenue (208) sont situés sur des côtés opposés de l'une desdites ouvertures de broche (203).

9. Ensemble d'usure selon la revendication 8, dans lequel ledit boîtier (101) s'étend dans une première direction entre une première extrémité et une seconde extrémité et comporte un gradin de fixation (109) sur ladite première extrémité qui est configuré pour recevoir ladite extrémité en forme d'arc (205) de ladite attache (204), de telle sorte que lorsque ledit boîtier (101) est fixé à ladite attache (204), ladite seconde extrémité est située plus près de ladite extrémité ouverte (206) que de ladite première extrémité, et ledit gradin de fixation (109) empêche le déplacement de ladite extrémité en forme d'arc (205) de ladite attache (204) vers ladite interface.

10. Ensemble d'usure selon l'une quelconque des revendications 8 ou 9, dans lequel ledit boîtier (101) s'étend dans une première direction entre une première extrémité et une seconde extrémité et comporte des moyens d'encliquetage (110) sur ladite première extrémité qui sont configurés pour fixer ladite extrémité en forme d'arc (205) de ladite attache (204) par encliquetage, de telle sorte que lorsque ledit boîtier (101) est fixé à ladite attache (204), ladite seconde extrémité est située plus près de ladite extrémité ouverte (206) que ladite première extrémité ; lesdits moyens d'encliquetage (110) étant de préférence sous la forme d'une aile.

11. Ensemble d'usure selon l'une quelconque des revendications 9 ou 10, dans lequel ledit boîtier (101) présente une face avant (111) opposée à ladite interface lorsque ledit support d'aimant (100) est inséré dans l'élément d'usure (2) ou le support (3) correspondant, une face arrière (112), opposée à ladite face avant (111), et des faces latérales s'étendant entre ladite première extrémité, ladite seconde extrémité, ladite face avant (111) et ladite face arrière (112); dans lequel ledit boîtier (101) présente des enfoncements (113) dans la partie avant desdites faces latérales, ledit support d'aimant (100) étant configurés de telle sorte que, lorsque ladite attache (204) est fixée audit boîtier (101), des segments desdits bras (207) de ladite attache (204) sont agencés en contact avec lesdites faces latérales dudit boîtier (101) et derrière lesdits enfoncements (113), en formant ainsi des sièges latéraux (114) ; et dans lequel ledit logement (102) comprend des saillies de retenue (115) complémentaires desdits sièges latéraux (114), de telle sorte que lorsque ledit support d'aimant (100) est inséré dans ledit logement (102), lesdits sièges latéraux (114) et lesdites saillies de retenue (115) coopèrent pour empêcher ledit support d'aimant (100) d'être déplacé vers l'avant.

12. Ensemble d'usure selon la revendication 11, dans lequel ledit boîtier (101) comporte des saillies latérales (116), agencées sur ladite seconde extrémité, ledit support d'aimant (100) étant configuré de telle sorte que lorsque ladite attache (204) est fixée audit boîtier (101), des segments desdits bras (207) de ladite attache (204) sont agencés devant lesdites saillies latérales (116).

13. Ensemble d'usure selon l'une quelconque des revendications 7 à 12, dans lequel ledit boîtier (101) est fabriqué à partir d'un plastique résistant à la chaleur.

14. Ensemble d'usure selon l'une quelconque des revendications 7 à 12, dans lequel ledit boîtier (101) est fabriqué à partir de métal, et présente de préférence une bande de matériau élastique, plus préférablement de polyuréthane (117).

15. Machine de terrassement comprenant au moins un ensemble d'usure selon l'une quelconque des revendications 1 à 14.
